# EUROPEAN PATENT APPLICATION

(11) **EP 2 292 464 A1**
(43) Date of publication of application: **09.03.2011**
(21) Application number: 10173993.6
(22) Date of filing: 25.08.2010
(51) Int. Cl.: B60Q 1/14, B60R 1/00, G02B 23/12, F21V 14/08, H04N 5/00, H04N 5/355

(54) **Vehicle headlight system**

(30) Priority: 01.09.2009 JP 2009201273
(71) Applicant: Koito Manufacturing Co., Ltd., Tokyo 108-8711 (JP)
(72) Inventor: Tatara, Naoki, Shizuoka-shi Shizuoka (JP); Endo, Osamu, Shizuoka-shi Shizuoka (JP)
(74) Representative: Grünecker, Kinkeldey, Stockmair & Schwanhäusser Anwaltssozietät

(57) **Abstract**

There is provided a vehicle headlight system (100) comprising: a lamp unit (10) configured to selectively illuminate a front region in front of a vehicle with a one of a plurality of light distribution patterns; a capturing unit (102) configured to capture image frame data of the front region, the image frame data including the light distribution pattern; a light blocking storage unit (106) configured to store light blocking information in which light blocking regions of each light distribution patterns is associated with each light distribution pattern; an extraction processor (104) configured to extract a target object in the image frame data; and a controller (302) configured to select a light distribution pattern, wherein when the extraction processor (104) extracts the target object in the image frame data, the controller (302) selects a light distribution pattern that is capable of suppressing glare directed to the target object, and wherein the extraction processor (104) sets a region of interest in a light blocking region based on the light blocking information.

## Description

### BACKGROUND OF THE INVENTION

### Technical Field

The present invention relates to a vehicle headlight system, and more particularly, to a vehicle headlight system that automatically blocks light in at least a part of an irradiation region in order to prevent glare while a vehicle travels.

### Related Art

In the past, there has been proposed a system that acquires image data of the front side of a vehicle by an image acquisition device such as a camera mounted on the vehicle and uses the image data to control the vehicle. Among those systems, there is a system that detects a forward located vehicle (either an oncoming vehicle or a forward traveling vehicle), which is located on the front side of a subject vehicle, as image data and automatically controls headlights of the subject vehicle so that glare causing discomfort is not directed to a driver or a fellow passenger of a detected oncoming vehicle or a detected forward traveling vehicle. For example, JP-A-2008-37240 discloses a system that forms high beam irradiation regions that can be separately irradiated by a plurality of high beam units, and acquires images of the front side of a vehicle by a CCD camera or the like, and detects an object, such as an oncoming vehicle, that should not be irradiated. Further, glare is not directed at the object that should not be irradiated by turning off a high beam unit, which would irradiate the region where the object that should not be irradiated is located.

In the above-mentioned system, if an oncoming vehicle or a forward traveling vehicle exists, it may be possible to achieve the prevention of glare by changing a light distribution pattern so that light is not directed to the region where the oncoming vehicle or the forward traveling vehicle is located. On the other hand, since the irradiation of a vehicle or a pedestrian, which is located on the front side of a vehicle, with light is temporarily stopped, detection performance may temporarily deteriorate due to the darkness caused by light blocking when a vehicle or a pedestrian, which exists on the front side, is detected by a CCD camera or the like. As a result, the detection of an object in a light blocking portion is delayed, so that the change of the next light distribution pattern may not be smoothly controlled. Further, while a lane or the like is detected, the light blocking portion is widened, so that the accuracy of the detection of the lane may deteriorate. Accordingly, a control based on the detection of the lane may not be smoothly performed.

### SUMMARY OF THE INVENTION

It is an illustrative aspect of the present invention to provide a vehicle headlight system that can reduce the deterioration of an ability to detect an object in a light blocking portion of an irradiation region even when light is automatically blocked in at least a part of the irradiation region in order to prevent glare.

According to one or more illustrative aspects of the present invention, there is provided a vehicle headlight system including a lamp unit configured to selectively illuminate a front region in front of a vehicle with one of a plurality of types of light distribution patterns; a capturing unit configured to capture image frame data of the front region, the image frame data including the one of the plurality of types of light distribution patterns; a light blocking storage unit configured to store light blocking information in which light blocking regions of the plurality of types of light distribution patterns are associated with the types of the light distribution patterns; an extraction processor configured to extract a target object in the image frame data; and a controller configured to select one of the plurality of types of the light distribution patterns, wherein when the extraction processor extracts the target object in the image frame data, the controller selects one of the plurality of types of light distribution patterns that is capable of suppressing glare directed to the target object, and wherein the extraction processor sets a region of interest in a light blocking region of the selected light distribution pattern on the image frame data, based on the light blocking information, thereby improving extraction performance of extracting the target object in the region of interest.

The target object includes, for example, a pedestrian or a bicycle in addition to a forward located vehicle such as an oncoming vehicle or a forward traveling vehicle. When the target object is confirmed, the controller selects a light distribution pattern including a light blocking region that does not direct glare at the target object. Since the light blocking storage unit stores the types of the light distribution patterns and the light blocking information corresponding to light blocking regions of the light distribution patterns, the extraction processor specifies a light blocking region based on the current light distribution pattern and sets a region of interest, which corresponds to the light blocking region, on the image frame data. Further, the extraction performance for extracting the target object in the region of interest is improved. In this case, it is preferable that the extraction performance be equal to or close to the extraction performance in the light unblocking region. According to this aspect, even when light is blocked in at least a part of the irradiation region in order to prevent glare, it may be possible to reduce the deterioration of the detection performance detecting the target object in the light blocking portion of the irradiation region. Accordingly, it may be possible to quickly and accurately recognize the target object and the like existing in the light blocking region.

The extraction processor may also perform brightness adjustment, which increases the brightness of the region of interest, in order to improve the extraction performance of extracting the target object. According to this aspect, it may be possible to easily detect the target object in the light blocking region.

The vehicle headlight system may further include a notification unit that notifies a driver of the fact that the target object exists in the light blocking region, when the target object exists in the light blocking region. When the target object exists in the light blocking region, the notification unit notifies a driver of, for example, the existence of the target object with a voice or an image. In this case, the notification unit may notify a driver of whether the target object is, specifically, an oncoming vehicle, a forward traveling vehicle, or a pedestrian, by analyzing the target object. Alternatively, the notification unit may merely notify a driver of the existence of the object. According to this aspect, even though the light blocking region is changed, the state of the light blocking region is notified to a driver. Accordingly, even when a field of view is changed due to light blocking, it may be possible to suppress discomfort that may be felt by a driver due to the change of the field of view.

Other aspects and advantages of the present invention will be apparent from the following description, the drawings and the claims.

### BRIEF DESCRIPTION OF THE DRAWINGS

Fig. 1 is a conceptual diagram showing a vehicle headlight system according to an embodiment of the invention;
Fig. 2 is a schematic cross-sectional view showing the internal structure of a headlight unit of the vehicle headlight system according to the embodiment;
Fig. 3 is a schematic perspective view of a rotary shade that may be mounted on the vehicle headlight system according to the embodiment;
Figs. 4A to 4D are views exemplifying light distribution patterns that can be formed by the vehicle headlight system according to the embodiment;
Fig. 5 is a functional block diagram illustrating an operational interaction between irradiation controllers of headlight units of the vehicle headlight system and a vehicle controller provided in a vehicle;
Fig. 6 is a view illustrating an example of light blocking information that is stored in a light blocking storage unit of the vehicle headlight system according to the embodiment; and
Figs. 7A and 7B are views illustrating a light blocking region and a region of interest (ROI) on image frame data of the vehicle headlight system according to the embodiment.

### DETAILED DESCRIPTION OF EXEMPLARY EMBODIMENTS

Exemplary embodiments of the invention will be now described in detail below with reference to drawings.

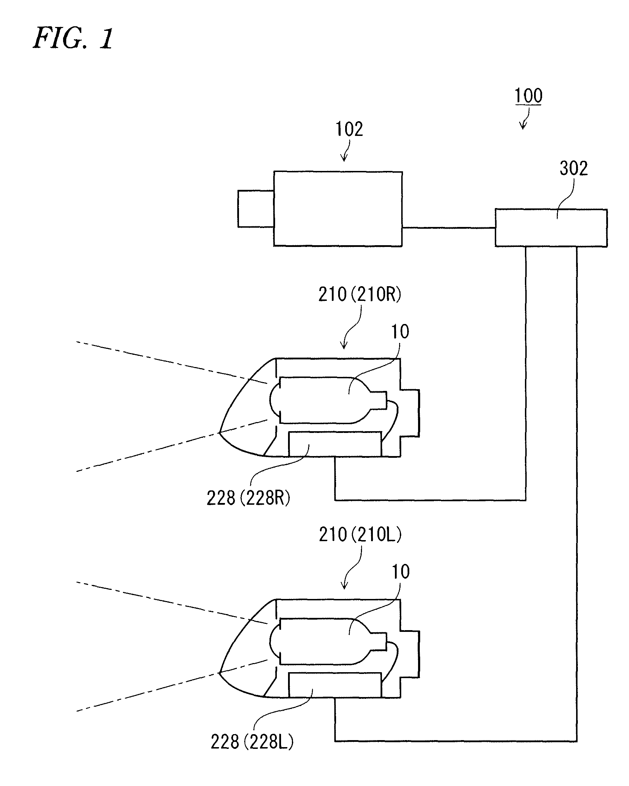

Fig. 1 is a conceptual diagram showing the structure of a vehicle headlight system 100 according to an embodiment of the invention. The vehicle headlight system 100 mainly includes a capturing unit 102, a vehicle controller 302, and headlight units 210. The headlight units 210 are formed of a left headlight unit 210L and a right headlight unit 210R that are respectively disposed at end portions of a vehicle in a vehicle width direction. Each of the headlight units 210L and 210R of this embodiment is a so-called adaptive front-lighting system (AFS) that forms a low beam light distribution pattern by blocking a part of a beam irradiated from, for example, one light source and forms a high beam light distribution pattern when not blocking the beam.

A lamp unit 10, which is included in each of the headlight units 210L and 210R, forms a plurality of light distribution patterns having optical axes that are directed to the front side of a vehicle and orthogonal to the vehicle width direction. Each of the headlight units 210L and 210R includes low and high beam light distribution patterns for left-side travel that are used in a region where vehicles or pedestrians keep to the left according to a traffic regulation. Further, a side high light distribution pattern, which is formed by blocking light on a traveling lane side or an opposite lane side of the high beam light distribution pattern, a concave light distribution pattern, which is formed by blocking light at the middle portion of the high beam light distribution pattern, or the like may also be formed. Meanwhile, the shapes of light distribution patterns formed by a lamp unit 10, which is used in a region where vehicles or pedestrians keep to the right according to a traffic regulation, are symmetrical with those of the light distribution patterns for left-side travel.

The capturing unit 102 may be formed of, for example, a CCD camera that acquires image frame data of the front side of the vehicle. It is preferable that the capturing unit 102 be fixed at a position where the capturing unit can look ahead of the vehicle and is in a sweep range of a windshield wiper. For example, the capturing unit could be fixed to a bracket provided on the back side of a rear-view mirror (inside the front glass). A capturing range of the capturing unit 102 includes at least a traveling lane where a vehicle travels, an opposite lane, and a sidewalk on the front region of a vehicle, and preferably includes an irradiation region of the high beam light distribution pattern. Further, if a plurality of lanes exists on one side, the capturing range includes a traveling lane and at least left and right lanes of the traveling lane and preferably includes an irradiation region of the high beam light distribution pattern. Meanwhile, if the capturing unit has a swivel function, it is preferable that a capturing range of the capturing unit be equal to or wider than a range obtained by adding a swivel angle to the above-mentioned capturing range.

The vehicle controller 302 detects a target object, such as a forward located vehicle (such as an oncoming vehicle or a forward traveling vehicle, which exists on the front side of the vehicle), a pedestrian, or a bicycle, based on the image frame data; and determines whether the target object is a target object that receives glare from a high beam light distribution pattern irradiated by the vehicle. The vehicle controller 302 provides information, which is based on the result of the determination, to irradiation controllers 228L and 228R of the headlight units 210L and 210R. Each of the irradiation controllers 228L and 228R performs a control for selecting and forming a light distribution pattern suitable for the circumstances around the vehicle, that is, a light distribution pattern that does not direct glare or a light distribution pattern that improves driver's field of view, based on the information that is provided from the vehicle controller 302.

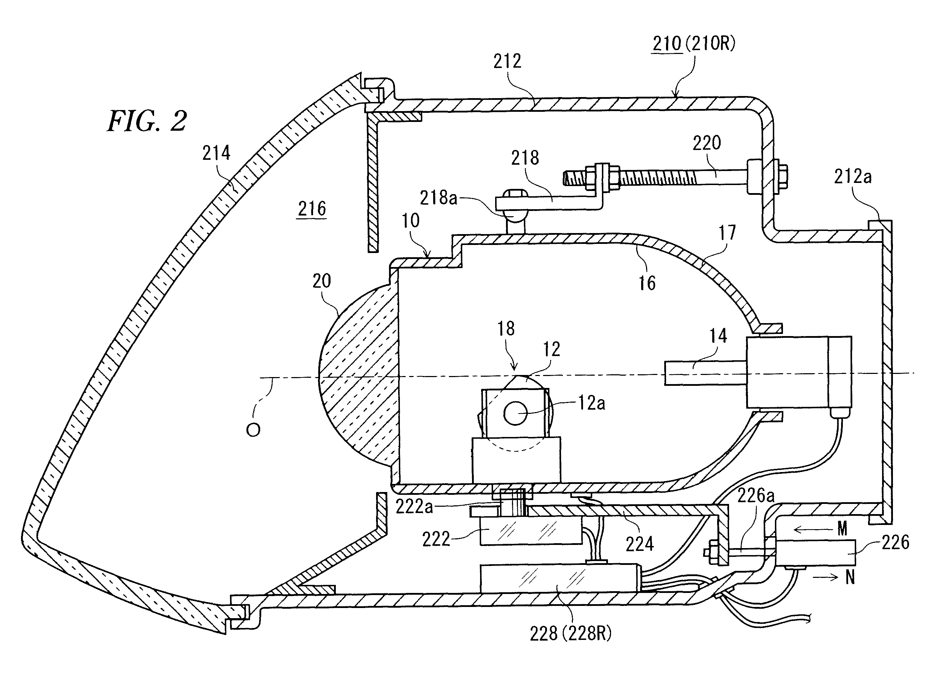

Fig. 2 is a schematic cross-sectional view showing the internal structure of the headlight unit 210. As described above, the headlight unit 210 is an adaptive front-lighting system (AFS) that is disposed at each of the left and right portions of the vehicle in the vehicle width direction, and the structure of the headlight unit disposed on the right portion is substantially the same as that of the headlight unit disposed on the left portion. Accordingly, the structure of the headlight unit 210R disposed on the right portion of the vehicle will be described below on behalf of the structure of the headlight units. The headlight unit 210R includes a lamp body 212 and a transparent cover 214. The lamp body 212 includes an opening that is formed at a front portion of the lamp body on the front side of the vehicle, and a detachable cover 212a that is provided at a rear portion of the lamp body and is separated at the time of the replacement of a bulb 14. Further, the transparent cover 214 is connected to the opening formed at the front portion of the lamp body 212, so that a lamp chamber 216 is formed. A lamp unit 10, which irradiates light to the front side of the vehicle, is received in the lamp chamber 216. A lamp bracket 218, which includes a pivot mechanism 218a to serve as a swiveling center of the lamp unit 10, is formed at a part of the lamp unit 10. The lamp bracket 218 is connected to aiming adjustment screws 220 that are rotatably supported on the wall surface of the lamp body 212. Accordingly, the lamp unit 10 is supported at a predetermined position in the lamp chamber 216 while being tiltable by the adjustment of the aiming adjustment screws 220.

Furthermore, a rotating shaft 222a of a swivel actuator 222 (which forms an adaptive front-lighting system (AFS) for a curved road to illuminates in a traveling direction while a vehicle travels on a curved road) is fixed to the lower surface of the lamp unit 10. The swivel actuator 222 makes the lamp unit 10 swivel about the pivot mechanism 218a in the traveling direction based on the steering angle data provided from the vehicle, the shape data of a traveling road provided from a navigation system, and a relative positional relationship between the vehicle and a forward located vehicle. As a result, the irradiation region of the lamp unit 10 faces not only the front side of the vehicle but also faces the front side on the curved road, so that driver's forward field of view is improved. The swivel actuator 222 may be formed of, for example, a stepping motor. A mechanism including the swivel actuator 222 functions as an optical axis swivel mechanism that makes the optical axis swivel in the vehicle width direction. Meanwhile, if a swivel angle has a fixed value, a solenoid or the like may be used as the swivel actuator 222.

The swivel actuator 222 is fixed to a unit bracket 224. A leveling actuator 226, which is disposed outside the lamp body 212, is connected to the unit bracket 224. For example, the leveling actuator 226 is formed of a motor or the like that pushes and pulls a rod 226a in directions of arrows M and N. If the rod 226a is pushed in the direction of the arrow M, the lamp unit 10 swivels about the pivot mechanism 218a so as to be in a backward inclined posture. In contrast, if the rod 226a is pulled in the direction of the arrow N, the lamp unit 10 swivels about the pivot mechanism 218a so as to be in a forward inclined posture. When the lamp unit 10 is in the backward inclined posture, it may be possible to perform leveling adjustment for making the optical axis be directed to the upper side. Further, when the lamp unit 10 is in the forward inclined posture, it may be possible to perform leveling adjustment for making the optical axis be directed to the lower side. It may be possible to adjust the optical axis in accordance with the posture of the vehicle by performing the leveling adjustment as described above. As a result, it may be possible to adjust the range of light, which is irradiated toward the front side by the headlight unit 210, to an optimum distance. Meanwhile, the mechanism including the leveling actuator 226 may be referred to as an optical axis swivel mechanism.

The leveling adjustment may be performed in accordance with the posture of a vehicle that is traveling. For example, if a vehicle accelerates while traveling, the posture of the vehicle becomes the backward inclined posture. In contrast, if a vehicle decelerates while traveling, the posture of the vehicle becomes the forward inclined posture. Accordingly, the irradiation direction of the headlight unit 210 also changes in a vertical direction in accordance with the posture of the vehicle, and forward irradiation distance increases or decreases. Further, it may be possible to optimally adjust the range of light, which is irradiated toward the front side, even while the vehicle is traveling by performing the leveling adjustment of the lamp unit 10 in real time based on the posture of the vehicle. This may be referred to as "auto-leveling".

An irradiation controller 228, which controls the turning-on/off of the lamp unit 10 or controls the formation of a light distribution pattern, is disposed on the inner wall surface of the lamp chamber 216, for example, below the lamp unit 10. In the case of Fig. 2, an irradiation controller 228R is disposed to control the headlight unit 210R. The irradiation controller 228R also controls the swivel actuator 222, the leveling actuator 226, and the like. Meanwhile, the headlight unit 210L may include a dedicated irradiation controller 228L. Alternatively, the irradiation controller 228R provided in the headlight unit 210R may collectively control the respective actuators of the headlight units 210R and 210L or collectively control the formation of the light distribution patterns.

The lamp unit 10 may include an aiming adjustment mechanism. For example, an aiming pivot mechanism, which functions as a swiveling center during aiming adjustment, is disposed at a connection portion between the unit bracket 224 and the rod 226a of the leveling actuator 226. Further, a pair of the above-mentioned aiming adjustment screws 220 is disposed at the lamp bracket 218 at an interval in the vehicle width direction. For example, when the two aiming adjustment screws 220 are rotated in a counterclockwise direction, the lamp unit 10 swivels about the aiming pivot mechanism so as to be in the forward inclined posture. Accordingly, an optical axis is adjusted so as to be directed to the lower side. Likewise, when the two aiming adjustment screws 220 are rotated in a clockwise direction, the lamp unit 10 swivels about the aiming pivot mechanism so as to be in the backward inclined posture. Accordingly, an optical axis is adjusted so as to be directed to the upper side. Furthermore, when the aiming adjustment screw 220, which is disposed on the left side in the vehicle width direction, is rotated in the counterclockwise direction, the lamp unit 10 swivels about the aiming pivot mechanism so as to be positioned in a right swivel posture. Accordingly, an optical axis is adjusted so as to be directed to the right side. Moreover, when the aiming adjustment screw 220, which is disposed on the right side in the vehicle width direction, is rotated in the counterclockwise direction, the lamp unit 10 swivels about the aiming pivot mechanism to be positioned in a left swivel posture. Accordingly, an optical axis is adjusted so as to be directed to the left side. This aiming adjustment is performed at the time of the shipment of vehicles, the detection of vehicles, or the replacement of the headlight unit 210. Further, the headlight unit 210 is adjusted to a posture that is prescribed in design, and the formation of the light distribution pattern of this embodiment is controlled based on this posture.

The lamp unit 10 includes a shade mechanism 18 including a rotary shade 12 (which may also be referred to as a variable shade), a bulb 14 as a light source, a lamp housing 17 that supports the reflector 16 on an inner wall thereof, and a projection lens 20. For example, an incandescent bulb, a halogen lamp, a discharge bulb, an LED, or the like may be used as the bulb 14. In this embodiment, the bulb 14 formed of a halogen lamp is shown as an example. The reflector 16 reflects light that is emitted from the bulb 14. Further, a part of the light emitted from the bulb 14 and the light reflected by the reflector 16 are guided to the projection lens 20 through the rotary shade 12 of the shade mechanism 28.

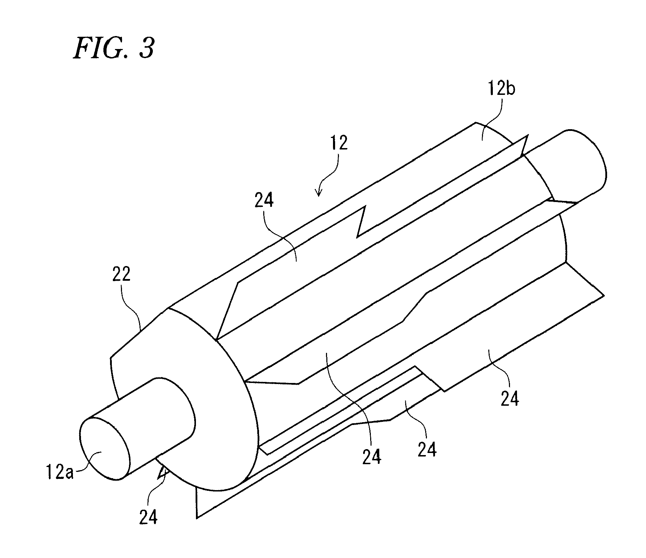

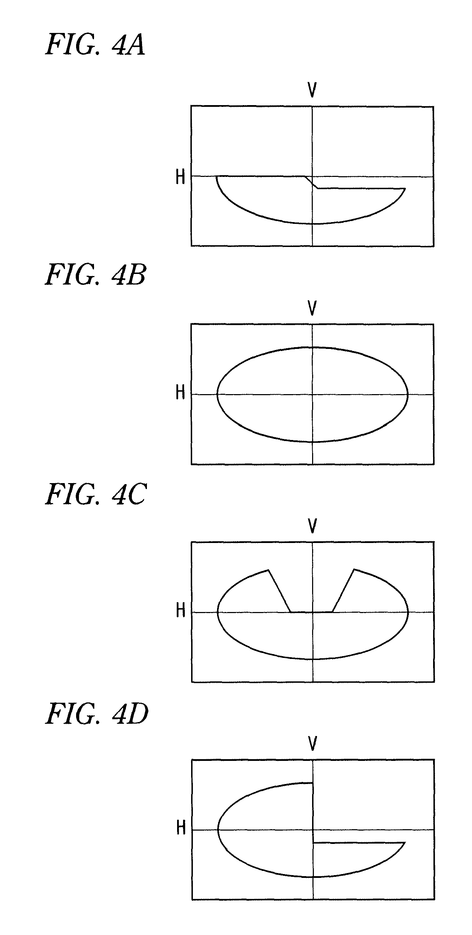

Fig. 3 is a schematic perspective view of the rotary shade 12. The rotary shade 12 is a cylindrical member that is rotatable about a rotating shaft 12a. Moreover, the rotary shade 12 includes a cutout portion 22 that is formed by cutting a part of the rotary shade in an axial direction, and holds a plurality of plate-like shade plates 24 on an outer peripheral surface 12b except for the cutout portion 22. The rotary shade 12 may move one of the cutout portion 22 and the shade plates 24 to a position on a rear focal plane, which includes the rear focus of the projection lens 20, in accordance with the rotation angle thereof. Further, a light distribution pattern is formed so as to follow the shape of an edge portion of the shade plate 24, which is positioned on the optical axis O, in accordance with the rotation angle of the rotary shade 12. For example, when one of shade plates 24 of the rotary shade 12 is moved onto the optical axis O and blocks a part of light emitted from the bulb 14, there is formed a low beam light distribution pattern shown in Fig. 4A or a light distribution pattern that partially has the characteristics of a low beam light distribution pattern. Further, when the cutout portion 22 is moved onto the optical axis O and does not block the light emitted from the bulb 14, there is formed a high beam light distribution pattern shown in Fig. 4B. Likewise, a concave light distribution pattern shown in Fig. 4c and a side high light distribution pattern, which is shown in Fig. 4D and partially has the characteristics of a high beam light distribution pattern, are formed according to the shape of the shade plate 24.

The rotary shade 12 may be rotated by the driving of, for example, a motor. Accordingly, the rotary shade moves the cutout portion 22 or the shade plates 24, which are used to form a desired light distribution pattern, around the optical axis O by controlling the rotation angle of the motor. Meanwhile, the cutout portion 22 formed on the outer peripheral surface 12b of the rotary shade 12 may be omitted so that the rotary shade 12 has only a function of blocking light. Further, in order to form a high beam light distribution pattern, the rotary shade 12 may be made to retreat from the position of the optical axis O by the driving of, for example, a solenoid or the like. In this case, since the rotary shade 12 does not include the cutout portion 22, a low beam light distribution pattern or a light distribution pattern similar to the low beam light distribution pattern is fixed even though, for example, a motor for rotating the rotary shade 12 fails. That is, it may be possible to reliably avoid the rotary shade 12 being fixed at a posture where a high beam light distribution pattern is formed, so that a fail-safe function is achieved.

The projection lens 20 is disposed on the optical axis O extending in the longitudinal direction of the vehicle, and the bulb 14 is disposed on the rear side of a rear focal plane of the projection lens 20. The projection lens 20 is a plano-convex aspheric lens of which the front surface is a convex surface and the rear surface is a flat surface. The projection lens projects, as an inverted image, a light source image formed on the rear focal plane onto a virtual vertical screen, which is formed on the front side of the headlight unit 210, as an inverted image.

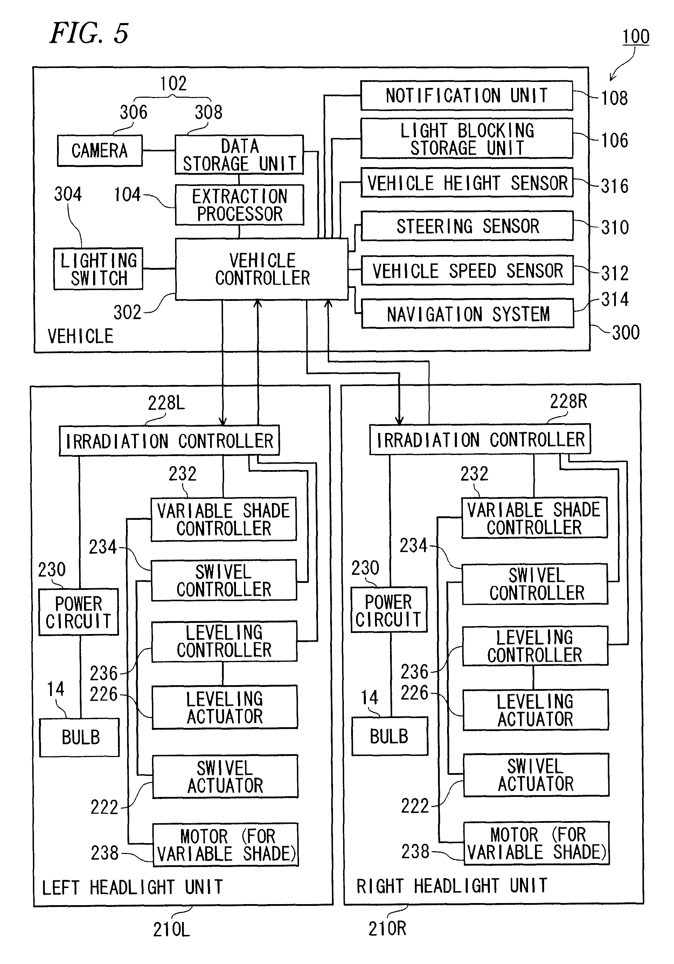

Fig. 5 is a functional block diagram illustrating the entire vehicle headlight system 100. That is, Fig. 5 is a diagram illustrating an operational interaction between the irradiation controllers 228L and 228R of the headlight units 210L and 210R having the above-mentioned structure and the vehicle controller 302 provided in the vehicle 300. Meanwhile, since the structure of the headlight unit 210L is basically the same as that of the headlight unit 210R as described above, only the headlight unit 210R will be described and the description of the headlight unit 210L will be omitted. Meanwhile, when the left and right headlight units 210L and 210R do not need to be particularly distinguished from each other in the description, suffixes "L" and "R" may be omitted. When left and right members of other members do not need to be distinguished from each other either, suffixes "L" and "R" may be omitted likewise. Further, in this embodiment, there will be described an example where the vehicle controller 302 performs a control on the vehicle based on the information sent from various sensors, provides information, which is obtained from the vehicle, to the irradiation controllers 228, and selects light distribution patterns of the headlight units 210 by the irradiation controllers 228.

The irradiation controller 228R of the headlight unit 210R controls the turning-on/off of the bulb 14 by controlling a power circuit 230 based on the information obtained from the vehicle controller 302 mounted on the vehicle 300. Furthermore, the irradiation controller 228R controls a variable shade controller 232, a swivel controller 234, and a leveling controller 236 based on the information obtained from the vehicle controller 302. The variable shade controller 232 moves a desired shade plate 24 or the cutout portion 22 around the optical axis O by controlling the driving of a motor 238 that is connected to the rotating shaft 12a of the rotary shade 12 through a gear mechanism. Meanwhile, rotation information, which represents the rotation state of the rotary shade 12 and which is obtained from a detection sensor such as an encoder provided on the motor 238 or the rotary shade 12, is provided to the variable shade controller 232, and accurate rotation control is achieved by feedback control.

The swivel controller 234 adjusts the optical axis of the lamp unit 10 in the vehicle width direction by controlling the swivel actuator 222. For example, when a vehicle travels on a curved road or turns right or left, the swivel controller directs the optical axis of the lamp unit 10 to the traveling direction where the vehicle is to travel. Further, the leveling controller 236 adjusts the optical axis of the lamp unit 10 in the vertical direction of the vehicle by controlling the leveling actuator 226. For example, the leveling controller 236 adjusts the range of light, which is irradiated toward the front side, to an optimum distance by detecting the change in the vehicle height during the acceleration or deceleration based on the information obtained from a vehicle height sensor 316, and adjusting the posture of the lamp unit 10 in accordance with the forward or backward inclination of the vehicle posture. The irradiation controller 228L performs the same control on the headlight unit 210L.

In the case of this embodiment, the light distribution patterns formed by the headlight units 210L and 210R may be switched in accordance with the operation of a lighting switch 304 that is performed by a driver. In this case, the vehicle controller 302 provides the operating state of the lighting switch 304 to the irradiation controllers 228L and 228R, and forms a desired light distribution pattern by the driving of the motors 238 with the variable shade controllers 232.

The headlight units 210L and 210R of this embodiment may be automatically controlled so as to form optimum light distribution patterns corresponding to the circumstances around the vehicle, which are detected by various sensors, without the operation of the lighting switch 304. For example, if the vehicle controller 302 might detect that a target object, such as a forward running vehicle or an oncoming vehicle, exists on the front side of a vehicle, the irradiation controllers 228 determine that glare should be prevented by forming low beam light distribution patterns. Then, the irradiation controllers form low beam light distribution patterns. Further, if the vehicle controller 302 might detect that a target object, such as a forward traveling vehicle or an oncoming vehicle, does not exist on the front side of a vehicle, the irradiation controller 228 determines that the driver's field of view should be improved by forming high beam light distribution patterns where light is not blocked by the rotary shade 12. Then, the irradiation controllers form high beam light distribution patterns.

In order to detect a target object, such as a forward running vehicle or an oncoming vehicle, a camera 306 such as a stereo camera is connected to the vehicle controller 302 to recognize a target object. The image frame data of an image captured by the camera 306 is temporarily stored in a data storage unit 308 and is subjected to predetermined image processing such as object recognition processing in an extraction processor 104, so that a target object such as a vehicle in the image frame data is extracted. The extraction processor 104 recognizes a vehicle or a pedestrian by determining whether data corresponding to previously stored shape data of, for example, a vehicle or a pedestrian exist in the image frame data, through pattern recognition. Further, the extraction processor 104 can also recognize a vehicle by detecting headlights of an oncoming vehicle or tail lamps of a preceding vehicle. Specifically, two light spots of left and right headlights of a forward vehicle, or two light spots of left and right tail lamps make a set and are turned on and off. In this case, if the light spots are light spots of a vehicle, two light spots move while showing the same behavior. That is, if it may be possible to confirm two light spots that show the same behavior, it may be possible to assume that the two light spots are light spots of the headlights or tail lamps of a vehicle. Accordingly, it may be possible to regard the two light spots as those of the headlights or tail lamps of a forward vehicle. It is relatively easy to detect the light spots of headlights or tail lamps, and it may be possible to detect the light spots of headlights or tail lamps which are in the distance even though it is dark. Accordingly, a processing load is also low, and a forward traveling vehicle is quickly and accurately detected. Meanwhile, it may be possible to distinguish headlights from tail lamps by the color of the light spot. That is, if a light spot is "red", the light spot is a light spot of a tail lamp. If a light spot has a color other than red, it may be possible to assume that the light spot is a light spot of a headlight.

A light blocking storage unit 106 is connected to the vehicle controller 302. Light blocking information where the kinds of light distribution patterns correspond to light blocking regions of the light distribution patterns is stored in the light blocking storage unit 106. The vehicle controller 302 can acquire information about the kind of a light distribution pattern, which is currently selected, from the irradiation controller 228. Accordingly, the vehicle controller 302 can acquire information about the position of the light blocking region of the light distribution pattern, which is currently selected, by acquiring the information about the kind of the light distribution pattern, which is provided from the irradiation controller 228, and the light blocking information that is stored in the light blocking storage unit 106. The extraction processor 104 sets a region of interest (ROI), which corresponds to the light blocking region of the currently selected light distribution pattern, on the image frame data through the vehicle controller 302. Further, the extraction processor 104 performs a control that improves the extraction performance of extracting a target object in a region of interest. For example, the extraction processor 104 performs brightness adjustment for increasing the brightness of the region of interest. As a result, it is easy to silhouette an object in a region of interest, so that it may be possible to perform image processing such as pattern recognition. Therefore, it is easy to determine whether an object is a target object. In this case, since the extraction processor 104 increases the brightness of only the region of interest, there is no effect on the extraction of an object in a light unblocking region that is originally bright. As a result, it may be possible to extract a target object well in the light unblocking region and the light blocking region.

Meanwhile, in another embodiment, it may be possible to improve extraction performance in a region of interest, which is a light blocking region, by infrared light. In this case, the camera 306 of the capturing unit 102 is formed of a CCD camera that has sensitivity distribution up to infrared light, and the capturing unit 102 includes an infrared radiator that irradiates infrared light to the front side of the vehicle. If a region of interest is set, the extraction processor 104 irradiates at least the region of interest with infrared light by the infrared radiator. As a result, the camera 306 acquires a visible light image in a portion of the light unblocking region where visible light and infrared light are reflected, and acquires an infrared light image in a portion of the light blocking region where infrared light is reflected. Accordingly, image frame data, which can be acquired by the capturing unit 102, becomes a composite image that is obtained by combining the visible light image of the light unblocking region with the infrared light image of the light blocking region. Therefore, the extraction processor 104 can extract a target object by analyzing the acquired composite image together with the region of interest. Further, since the position of the region of interest is known, the extraction processor 104 can efficiently extract a target object by changing the intensity of the infrared light irradiating the region of interest in accordance with the detection state of an object in the region of interest. For example, if a target object can be easily extracted even through weak irradiation of infrared light, the output of infrared light is in an energy saving mode. Accordingly, it may be possible to suppress battery consumption without the deterioration of extraction performance. Furthermore, if the irradiation intensity of infrared light is increased when a certain object seems to exist but it is difficult to determine whether the certain object is a target object, it may be possible to make an accurate determination. Meanwhile, if infrared light is used, it is difficult to discriminate colors. For this reason, it is difficult to determine whether a light spot is a light spot of a headlight or a light spot of a tail lamp by the color of the light spot as described above. Accordingly, the extraction processor 104 may assume whether a vehicle extracted using the infrared light image is an oncoming vehicle of which headlights are seen or a preceding vehicle of which tail lamps are seen, by using information about whether a place where a region of interest 410 is set is on a traveling lane or an opposite lane.

Further, in another embodiment, it may be possible to improve extraction performance in a region of interest by electronically controlling the exposure time of respective image elements of the camera 306. For example, the exposure time of an image element corresponding to a bright region, which is a light unblocking region, is referred to as exposure time A at the time of usual capturing. Meanwhile, the exposure time of a dark region, which is a region of interest, is referred to as exposure time B that is longer than the exposure time A. In this case, an image acquisition cycle based on the exposure time B is obtained as a whole, but an image having standard brightness is obtained in the bright region that is the light unblocking region. There is a possibility that an image, which is slightly out of focus, will be obtained in the dark region of interest that is the light blocking region. However, it becomes bright due to the lengthening of the exposure time, so that it is easy to determine whether a target object exists. In the case of the structure that adjusts the exposure time, the camera 306 having the same performance as the performance of a related art camera may be used. Accordingly, it may be possible to improve extraction performance for extracting a target object without causing considerable increase in cost.

Meanwhile, when the extraction processor 104 performs a control for improving extraction performance, it is preferable that the extraction performance in the light blocking region be equal to or close to the extraction performance in the light unblocking region. If the extraction performance in the light blocking region is equal to or close to the extraction performance in the light unblocking region as described above, the extraction of a target object, which is performed by the extraction processor 104, becomes substantially constant in the image frame data. Accordingly, it may be possible to stably and reliably extract a target object.

If the extraction processor 104 extracts a target object in the light blocking region, a notification unit 108 notifies a driver of the extraction of the target object. In this case, the notification unit 108 may notify a driver of the existence of the target object by a voice through, for example, an in-vehicle speaker. Further, the notification unit 108 may notify a driver of the existence of the target object by displaying messages or images, which represent the existence of the target object, on an in-vehicle display or an overhead display. The notification, which is performed by the notification unit 108, may be a simple notification that merely represents the existence of the target object in the light blocking region, and may be a notification that attracts a driver's attention by adding additional information. For example, the notification unit 108 may display an image of the entire front side of the vehicle based on the image frame data acquired by the extraction processor 104, and may display a target object while specifying the light unblocking region and the light blocking region in the displayed image. The notification unit 108 can emphasize the existence of the target object in a region that becomes dark due to light blocking and can easily attract a driver's attention by displaying a target object existing in the light blocking region while specifying the light blocking region. Furthermore, the notification unit 108 may notify a driver of whether a target object is, specifically, an oncoming vehicle, a forward running vehicle, or a pedestrian, by analyzing the target object. In this case, the notification unit 108 may display the image of a vehicle or a pedestrian by using the image frame data that is obtained by the capturing unit 102, and may display a previously prepared image or mark of a vehicle or a pedestrian. Specifically, there is an advantage of attracting a driver's attention by displaying a vehicle or a pedestrian. Meanwhile, the notification unit 108 can further attract a driver's attention by making a notification using a voice and a mark. Meanwhile, the image frame data includes white lines (lane marks) or signs as well as a forward vehicle, a pedestrian, and a bicycle. Accordingly, the white lines or signs may be included as target objects in the light blocking region, and the existence of the white lines or signs may be indicated to a driver. Moreover, the detection of the white lines or signs may be used for the control of the vehicle headlight system as described in this embodiment, and may also be used for other control, such as the travel control or braking control of a vehicle, other than the control of the vehicle headlight system.

The image frame data, which is stored in the data storage unit 308, may be directly provided to the vehicle controller 302. For example, a real time image may be displayed on an in-vehicle display or an overhead display, and may be used for other control other than the control of the headlight system. In this embodiment, the capturing unit 102 includes the camera 306 and the data storage unit 308.

The vehicle controller 302 may also acquire information from a vehicle height sensor 316, a vehicle speed sensor 312, a steering sensor 310 and the like that are generally mounted on the vehicle 300. Further, the vehicle controller 302 provides the information of the traveling state or the travel posture of the vehicle 300 to the irradiation controller 228. The irradiation controller 228 may perform a control for selecting a light distribution pattern, which is formed based on various kinds of provided information, or simply changing the light distribution pattern by changing the direction of an optical axis. For example, if the vehicle controller 302 provides the information, which represents that a vehicle is turning, to the irradiation controller 228 based on the information obtained from the steering sensor 310, the irradiation controller 228 may select a shade plate 24, which forms a light distribution pattern for improving the field of view in the turning direction, by controlling the rotation of the rotary shade 12. Furthermore, the irradiation controller 228 may control the swivel actuator 222 by the swivel controller 234 without changing the rotational state of the rotary shade 12. As a result, the irradiation controller may improve the field of view in the turning direction by directing the optical axis of the lamp unit 10 to the turning direction. This control mode may be referred to as a turning sensing mode.

Moreover, when a vehicle travels at a high speed at nighttime, it is preferable that headlights illuminate the front side to allow a driver to recognize oncoming vehicles, forward running vehicles, road signs, or message boards as quickly as possible. Accordingly, if determining that a vehicle travels at a high speed based on the information obtained from the vehicle speed sensor 312, the vehicle controller 302 provides the information to the irradiation controller 228. The irradiation controller 228 selects a shade plate 24, which forms a low beam light distribution pattern corresponding to a highway mode where the shape of the low beam light distribution pattern is partially changed, by controlling the rotation of the rotary shade 12 based on the information. The same control may also be achieved by making the lamp unit 10 be in the backward inclined posture through the control of the leveling actuator 226 that is performed by the leveling controller 236. The automatic leveling control, which is performed during the acceleration or deceleration by the above-mentioned leveling actuator 226, is a control that maintains the irradiation distance to be constant. If the height of a cutoff line is actively controlled by using this control, it may be possible to perform a control equivalent to the control for selecting a different cutoff line by rotating the rotary shade 12. This control mode may be referred to as a speed sensing mode.

Meanwhile, the optical axis of the lamp unit 10 may be adjusted without using the swivel actuator 222 or the leveling actuator 226. For example, it may be possible to improve the field of view in a desired direction by making the lamp unit 10 swivel or be in the forward inclined posture or the backward inclined posture through an aiming control in real time.

In addition, the vehicle controller 302 may also acquire information about the shape or form of a road, information about the installation of road signs, and the like from a navigation system 314. These kinds of information are acquired in advance and provided to the irradiation controller 228. As a result, the irradiation controller 228 may smoothly form a light distribution pattern suitable for a traveling road by controlling the leveling actuator 226, the swivel actuator 222, the motor 238, and the like. This control mode may be referred to as a navigation sensing mode.

It may be possible to improve the field of view of a driver of the vehicle while suppressing glare directed to drivers or fellow passengers of forward vehicles, such as forward traveling vehicles or oncoming vehicles, by automatically changing the light distribution pattern of a vehicle in accordance with the traveling state of the vehicle or the circumstances around the vehicle as described above.

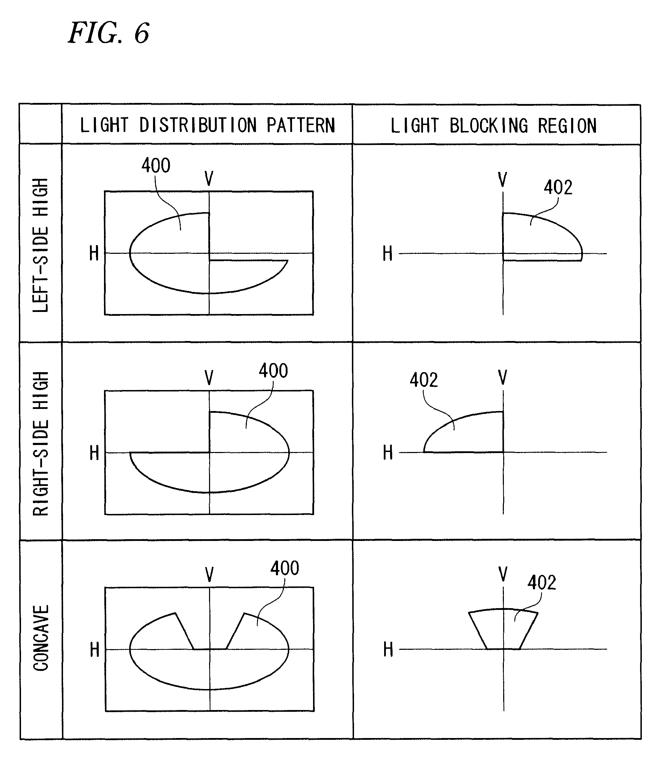

Fig. 6 shows an example of light blocking information that is stored in the light blocking storage unit 106.
The light blocking information of a "left-side high light distribution pattern", a "right-side high light distribution pattern", and a "concave light distribution pattern" are shown in Fig. 6 as an example. The left-side high light distribution pattern is a light distribution pattern that may be used in a region where vehicles or pedestrians keep to the left according to a traffic regulation. In the case of the left-side high light distribution pattern, light is blocked only in a region of a high beam light distribution pattern corresponding to an opposite lane. That is, the left-side high light distribution pattern is a light distribution pattern that can secure the forward field of view on the traveling lane by a high beam without directing glare to oncoming vehicles. The right-side high light distribution pattern is a light distribution pattern that may be used in a region where vehicles or pedestrians keep to the left according to a traffic regulation. In the case of the right-side high light distribution pattern, light is blocked only in a region of a high beam light distribution pattern corresponding to a traveling lane. That is, the right-side high light distribution pattern is a light distribution pattern that can secure the forward field of view on the opposite lane by a high beam without directing glare to preceding vehicles. The concave light distribution pattern is a light distribution pattern effective in the case where preceding vehicles or oncoming vehicles exist far away from the vehicle. The concave light distribution pattern is a light distribution pattern that can improve the field of view at a region close to the vehicle or in a direction facing the road without directing glare to vehicles that exist far away from the vehicle and exist near an intersection between a horizontal line H and a vertical line V.

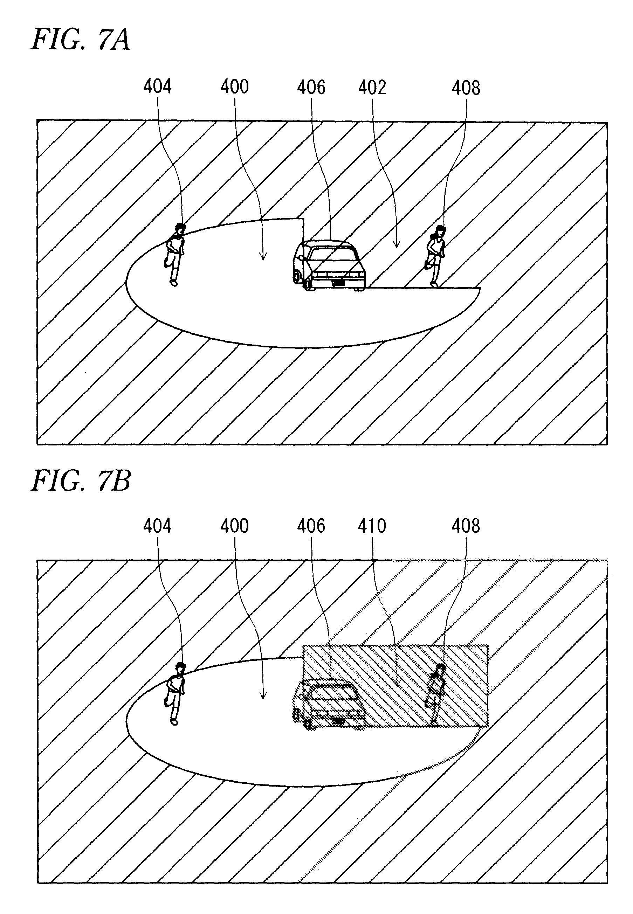

As shown in Fig. 6, light blocking regions corresponding to the respective light distribution patterns are stored in the light blocking storage unit 106. Accordingly, the extraction processor 104 can obtain the information about the light blocking region, which corresponds to the currently selected light distribution pattern, from the light blocking storage unit 106 through the vehicle controller 302. Further, the extraction processor 104 can acquire the information about the control state of the irradiation controller 228 through the vehicle controller 302. That is, the extraction processor 104 can acquire the kind of the currently selected light distribution pattern, the swiveling state, the leveling state, and the like. Accordingly, as shown in Fig. 7A, the extraction processor 104 can accurately classify a light unblocking region (irradiation region) 400 and a light blocking region 402, which are formed by the headlight units 210, on the image frame data that is acquired by the capturing unit 102. Fig, 7A shows an example where the headlight units 210 form a "left-side high light distribution pattern". Since the headlight units 210 irradiate the light unblocking region with light as described above, the extraction processor 104 can detect a pedestrian 404, who exists on the traveling lane, as a target object on the image frame data. Meanwhile, in the case of an example shown in Fig. 7A, an oncoming vehicle 406 and a pedestrian 408 exist even in the light blocking region 402. However, since the light blocking region 402 is not irradiated with light, the accuracy of the detection of the oncoming vehicle 406 or the pedestrian 408 on the image frame data is low as compared to the light unblocking region 400. Accordingly, as shown in Fig. 7B, the extraction processor 104 sets the region of interest 410 at a portion of the left-side high light distribution pattern, which corresponds to the light blocking region 402, with reference to the light blocking information of the light blocking storage unit 106 that is obtained through the vehicle controller 302. In the case of Fig. 7B, the region of interest 410 is set so as to be wider than an actual light blocking region of the left-side high light distribution pattern. However, the region of interest may be set so as to have the same size as that of the light blocking region 402 shown in Fig. 6.

If the region of interest 410 is set, the extraction processor 104 performs brightness adjustment to increase, for example, the brightness of the region of interest 410. As a result, it is easier to detect the oncoming vehicle 406 or the pedestrian 408 than before the brightness adjustment. In this case, since brightness adjustment is not performed in the light unblocking region 400 originally having sufficient brightness, the image of the light unblocking region 400 does not become excessively bright and white. As a result, the extraction processor 104 can easily detect a target object that exists in the light unblocking region 400 and the region of interest 410, that is, the light blocking region 402. In this case, the extraction processor 104 can accurately detect whether the oncoming vehicle 406 or the pedestrian 408 exists in the region of interest 410. For this reason, the irradiation controller 228 can accurately determine how long the current light distribution pattern preferably continues, based on the information that is obtained from the extraction processor 104 through the vehicle controller 302. That is, it may be possible to perform a control, which makes the left-side high light distribution pattern return to an original high beam light distribution pattern, at an appropriate time. Further, the irradiation controller 228 can accurately and quickly determine which light distribution pattern is preferably formed next, based on whether the oncoming vehicle 406 or the pedestrian 408 exists in the region of interest 410. As a result, it may be possible to quickly and accurately control the formation of an optimum light distribution pattern that is based on the circumstances around the vehicle. Furthermore, if the light blocking region 402 is formed by a left-side high light distribution pattern or the like when the vehicle controller 302 is detecting a lane, the accuracy of the detection of the lane may deteriorate. In this embodiment, it may be possible to maintain the accuracy of the detection of the lane by setting the region of interest 410 and performing brightness adjustment, and to stably detect the lane regardless of the selection of a light distribution pattern.

When the extraction processor 104 detects a target object in the region of interest 410, the notification unit 108 notifies a driver of detection results with a voice or an image. Since the light blocking region 402 is not irradiated with the light of the headlight units 210, a driver may feel discomfort such as the sudden change of a field of view when the light distribution pattern, which has been used until then, is switched to a new light distribution pattern. In this case, since the headlight units 210 are not completely turned off and a region irradiated with at least a low beam light distribution pattern remains as an irradiation region, the driver can normally drive the vehicle as usual but may feel psychological discomfort. In the case of this embodiment, when a target object exists in the light blocking region, the notification unit 108 may notify a driver of the existence of the target object. Accordingly, it may be possible to reduce the discomfort that may be felt by a driver as described above. Further, it may be possible to attract the driver's attention regarding the target object in the light blocking region 402 by the notification. Basically, the detection of a lane is not included in the notification. However, when it is detected that a vehicle abnormally approaches a white line representing a lane, it is preferable that the approach to the white line be notified in conjunction with the detection of a lane.

Meanwhile, in the above-mentioned embodiment, there has been described an example where the detection of a target object, such as a vehicle or a pedestrian, is performed on the side of the vehicle 300 and the selection of a light distribution pattern is performed in the irradiation controller 228. In another embodiment, the detection of a target object and the selection of a light distribution pattern may be performed by a controller provided on the vehicle 300 and it may be possible to obtain the same advantages as those of the above-mentioned embodiment. Moreover, the irradiation controller 228 may acquire the entire detection information of various sensors and the like from the vehicle 300, and the detection of a target object or the selection of a light distribution pattern may be performed on the side of the irradiation controller 228. Further, the structure of the headlight unit 210 has been shown in Fig. 2 as an example of the structure of the vehicle headlight system 100 and the functional block diagram of the vehicle headlight system has been shown in Fig. 5. However, as long as a vehicle headlight system automatically switches a light distribution pattern in accordance with surrounding circumstances, this embodiment may be applied to the vehicle headlight system and the same advantages may be obtained.

Although the present invention has been shown and described with reference to certain exemplary embodiments thereof, other implementations are within the scope of the claims. It will be understood by those skilled in the art that various changes in form and details may be made therein without departing from the spirit and scope of the invention as defined by the appended claims.

## Claims

1. A vehicle headlight system **(100)** comprising:
a lamp unit **(10)** configured to selectively illuminate a front region in front of a vehicle with one of a plurality of types of light distribution patterns;
a capturing unit **(102)** configured to capture image frame data of the front region, the image frame data including the one of the plurality of types of light distribution patterns;
a light blocking storage unit **(106)** configured to store light blocking information in which light blocking regions of the plurality of types of light distribution patterns are associated with the types of the light distribution patterns;
an extraction processor **(104)** configured to extract a target object in the image frame data; and
a controller **(302)** configured to select one of the plurality of types of the light distribution patterns,
wherein when the extraction processor **(104)** extracts the target object in the image frame data, the controller **(302)** selects one of the plurality of types of light distribution patterns that is capable of suppressing glare directed to the target object, and
wherein the extraction processor **(104)** sets a region of interest in a light blocking region of the selected light distribution pattern on the image frame data, based on the light blocking information, thereby improving extraction performance of extracting the target object in the region of interest.

2. The system according to claim **1,**
wherein the extraction processor **(104)** performs brightness adjustment, which increases the brightness of the region of interest, in order to improve the extraction performance of extracting the target object.

3. The system according to claim **1** or **2,** further comprising:
a notification unit **(108)** is configured to notify a driver of the fact that the target object exists in the light blocking region, when the target object exists in the light blocking region.
